# EUROPÄISCHE PATENTSCHRIFT

(11) **EP 1 744 924 B1**
(45) Veröffentlichungstag und Bekanntmachung des Hinweises auf die Patenterteilung: **09.05.2012**
(21) Anmeldenummer: 05729793.9
(22) Anmeldetag: 29.03.2005
(51) Int. Cl.: B60W 20/00, B60K 6/48

(54) **VERFAHREN UND VORRICHTUNG ZUM BETREIBEN EINES HYBRIDFAHRZEUGS**
METHOD AND DEVICE FOR OPERATING A HYBRID VEHICLE
PROCEDE ET DISPOSITIF POUR FAIRE FONCTIONNER UN VEHICULE HYBRIDE

(30) Priorität: 30.04.2004 DE 102004021370
(43) Veröffentlichungstag der Anmeldung: 24.01.2007
(73) Patentinhaber: ROBERT BOSCH GMBH, 70442 Stuttgart (DE)
(72) Erfinder: KATZENBERGER, Steffen, 75378 Bad Liebenzell (DE); WIDENMEYER, Markus, 71101 Schoenaich (DE)
(86) Internationale Anmeldenummer: PCT/EP2005/051422
(87) Internationale Veröffentlichungsnummer: WO 2005/105501

(56) Entgegenhaltungen:
- EP-A- 1 182 074
- EP-A- 1 291 510
- DE-A1- 10 041 535
- DE-A1- 19 748 421
- GB-A- 2 326 857
- US-A1- 2003 160 455

## Beschreibung

### Stand der Technik

Die Erfindung geht aus von einem Verfahren zum Betreiben eines Hybridfahrzeugs und einer Vorrichtung zur Durchführung des Verfahrens nach der Gattung der unabhängigen Ansprüche.

In der DE 101 28 758 A1 ist ein gattungsgemäßes Verfahren beschrieben, bei dem ein vorgegebener Drehmoment-Sollwert additiv von wenigstens einer Brennkraftmaschine und wenigstens einem Elektromotor aufgebracht wird. Die Brennkraftmaschine und der Elektromotor arbeiten zusammen über ein Getriebe auf die Antriebsräder des Hybridfahrzeugs. Die Steuerung des Elektromotors erfolgt in Abhängigkeit von einer Höheninformation, die ein Navigationssystem bereitstellt. Die Steuerung auf der Grundlage der Höheninformation hat den Vorteil, dass ein niedrigerer Mindestladezustand der für den Elektromotor vorgesehenen Energiequelle vorgesehen werden kann, da nach einer Bergfahrt bei der anschließenden Abfahrt eine kalkulierbare Energierückgewinnung zum Aufladen der Energiequelle mittels des als Generator arbeitenden Elektromotors eingeplant werden kann. Durch den gezielten Einsatz des Elektromotors insbesondere bei erhöhten Drehmomentanforderungen bei einer Bergfahrt kann die Brennkraftmaschine in einem verbrauchsgünstigen Betriebszustand betrieben werden. Insgesamt ergibt sich ein niedriger Energieverbrauch des Hybridfahrzeugs durch die Einplanung der bei einer Bergabfahrt voraussichtlich zurückgewinnbaren Energie.

In der DE 199 23 299 A1 ist ein Verfahren zum Steuern einer Brennkraftmaschine beschrieben, in deren Abgasbereich ein Partikelfilter angeordnet ist. Die zum Einleiten der Regeneration benötigte Temperatur wird durch eine gegebenenfalls erforderliche Erhöhung der Abgastemperatur vorgenommen. Die Erhöhung der Abgastemperatur erfolgt durch einen Eingriff in die Kraftstoffzufuhr der Brennkraftmaschine, wobei ein Einspritzzeitpunkt in Richtung spät verschoben wird, sodass aufgrund der Verminderung des Wirkungsgrades der Brennkraftmaschine eine erhöhte Abgastemperatur auftritt.

In der DE 100 43 366 A1 ist eine Brennkraftmaschine beschrieben, in deren Abgasbereich ein Katalysator angeordnet ist, der in bestimmten Betriebssituationen auf eine erhöhte Betriebstemperatur gebracht werden muss. Eine Möglichkeit zur Erhöhung der Betriebstemperatur des Katalysators ist durch eine Erhöhung der Abgastemperatur möglich. Die Abgastemperatur kann bei der zugrunde liegenden fremdgezündeten Brennkraftmaschine durch eine Verstellung des Zündzeitpunkts beeinflusst werden.

Aus der EP 944 424 B1 ist eine fremdgezündete Brennkraftmaschine mit einem NOx-Speicherkatalysator bekannt geworden, der einen Trägerkörper aus Metall aufweist, der durch Beaufschlagung mit einem elektrischen Strom beheizbar ist.

Aufs der gattungsgemäßen EP 1182 074 A2 ist ein Verfahren bekannt bei dem nach Feststellung einer "Kalt-Start" Bedingung die Generatorleistung erhöht wird, um die Last der Brennkraftmaschine zu erhöhen und somit den Schadstoffausstoß zu minimieren.

Aus der US 2003/0160455 A1 ist ein Fahrzeug mit Hybridantrieb bekannt, bei dem in Abhängigkeit der Abgastemperatur die Auslass- oder Einspritzzeitpunkte variiert werden, um den Schadstoffausstoß zu minimieren.

Aus der EP 1 291 510 A2 ist ein Hybridantrieb bekannt, bei dem in Abhängigkeit eines Parameters des Abgassystems die Verteilung des Gesamtantriebdrehmomentes in einzelne Anteile auf die Brennkraftmaschine und auf die elektrische Maschine vorgenommen wird, um den Betrieb des Abgasbehandlungssystems zu optimieren.

Aus der GB 2 326 857 A ist ein Hybrid-Fahrzeugantriebstrang bekannt, bei dem die Temperatur des Kalalysatorsystems überwacht wird. In Abhängigkeit dieser Temperatur wird die Brennkraftmaschine so gesteuert, dass Abgase erzeugt werden, die den Katalysator auf einer optimalen Betriebstemperatur halten.

Der Erfindung liegt die Aufgabe zugrunde, ein Verfahren zum Betreiben eines Hybridfahrzeugs und eine Vorrichtung zur Durchführung des Verfahrens anzugeben, die eine geringe Abgasemission des Hybridfahrzeugs ermöglichen.

Die Aufgabe wird durch die in den unabhängigen Ansprüchen angegebenen Merkmale jeweils gelöst.

### Vorteile der Erfindung

Die erfindungsgemäße Vorgehensweise geht davon aus, dass ein vorgegebener Drehmoment-Sollwert additiv von wenigstens einer Brennkraftmaschine und wenigstens einem Elektromotor aufzubringen ist. Erfindungsgemäß wird in einem ersten Schritt der Drehmomentbeitrag der Brennkraftmaschine in Abhängigkeit von wenigstens einer Kenngröße des Abgases der Brennkraftmaschine und in einem zweiten Schritt der Drehmomentbeitrag des Elektromotors anhand der Differenz zwischen dem Drehmoment-Sollwert und dem im ersten Schritt festgelegten Drehmomentbeitrag der Brennkraftmaschine festgelegt.

In Abhängigkeit von der Optimierungsaufgabe ist vorgesehen, dass eine Optimierung wenigstens einer Abgaskomponente Vorrang hat gegenüber einer Festlegung der Abgastemperatur. Zur Sicherstellung einer erforderlichen Mindest-Betriebstemperatur oder zur Aufrechterhaltung eines vorgegebenen Temperaturbereichs der Abgasbehandlungsvorrichtung ist in diesen Fällen eine elektrische Beheizung der Abgasbehandlungsvorrichtung vorgesehen. Diese Maßnahme kann insbesondere bei einem Kaltstart der Brennkraftmaschine vorgesehen sein, bei dem zur schnellen Erreichung der Mindest-Betriebstemperatur der Abgasbehandlungsvorrichtung in jedem Fall eine elektrische Beheizung vorgesehen wird. Sofern die Kaltstartphase bereits überwunden ist, ermöglichen diese Maßnahmen die Einhaltung des erforderlichen Betriebstemperaturbereichs.

Bei der Festlegung des Drehmoments handelt es sich allgemein um eine Festlegung der Antriebskraft oder der Antriebsleistung, die von den zusammenarbeitenden Antriebsmotoren des Hybridfahrzeugs aufzubringen ist.

Die Festlegung des Drehmomentbeitrags der Brennkraftmaschine im ersten Schritt in Abhängigkeit von wenigstens einer Kenngröße des Abgases ermöglicht einen emissionsoptimalen Betrieb der Brennkraftmaschine, der vom verbrauchsoptimalen Betrieb abweichen kann.

Vorteilhafte Weiterbildungen und Ausgestaltungen der erfindungsgemäßen Vorgehensweise ergeben sich aus abhängigen Ansprüchen.

Eine Kenngröße des Abgases kann beispielsweise eine unerwünschte Abgaskomponente wie die NOx-Konzentration, die CO-Konzentration, die HC-Konzentration oder die Partikel-Konzentration im Abgas sein. Durch das Betreiben der Brennkraftmaschine in einem Betriebszustand, bei dem zumindest eine dieser Kenngrößen einen möglichst geringen Wert aufweist, kann der Aufwand für eine erforderliche weitere Verminderung der schädlichen Abgaskomponente in einer Abgasbehandlungsvorrichtung verringert werden.

In einer anderen Ausgestaltung kann vorgesehen sein, dass die Kenngröße des Abgases die Abgastemperatur ist. Vorzugsweise wird die Abgastemperatur im Hinblick auf den Betriebstemperaturbereich einer vorhandenen Abgasbehandlungsvorrichtung vorgegeben. Hierbei kann es sich um die Sicherstellung einer Mindestbetriebstemperatur der Abgasbehandlungvorrichtung handeln.

Bei der Abgasbehandlungsvorrichtung handelt es sich beispielsweise um einen Katalysator oder beispielsweise ein Partikelfilter. Der Katalysator benötigt für die katalytische Wirkung eine Mindestbetriebstemperatur. Sofern es sich um einen Speicherkatalysator, beispielsweise einen NOx-Speicherkatalysator handelt, muss der Katalysator regeneriert werden. Zur Regeneration werden gegenüber der Betriebstemperatur von beispielsweise 250 - 500 °C erhöhte Temperaturen von 450 - 600 °C benötigt Ein vorhandenes Partikelfilter benötigt zum Einleiten der Regeneration ebenfalls eine erhöhte Temperatur, die beispielsweise im Bereich von 600 - 650 °C liegen kann. Das Betreiben der Brennkraftmaschine mit dem Ziel des Erreichens der benötigten Temperatur der Abgasbehandlungsvorrichtung kann bei der erfindungsgemäßen Vorgehensweise berücksichtigt werden.

Weitere vorteilhafte Ausgestaltungen und Weiterbildungen der erfindungsgemäßen Vorgehensweise ergeben sich aus weiteren abhängigen Ansprüchen und aus der folgenden Beschreibung.

### Zeichnung

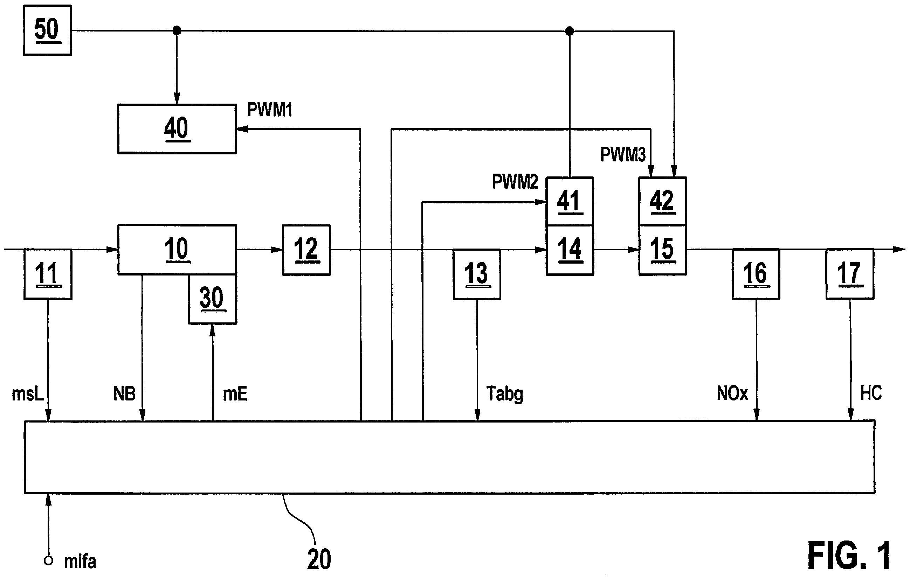

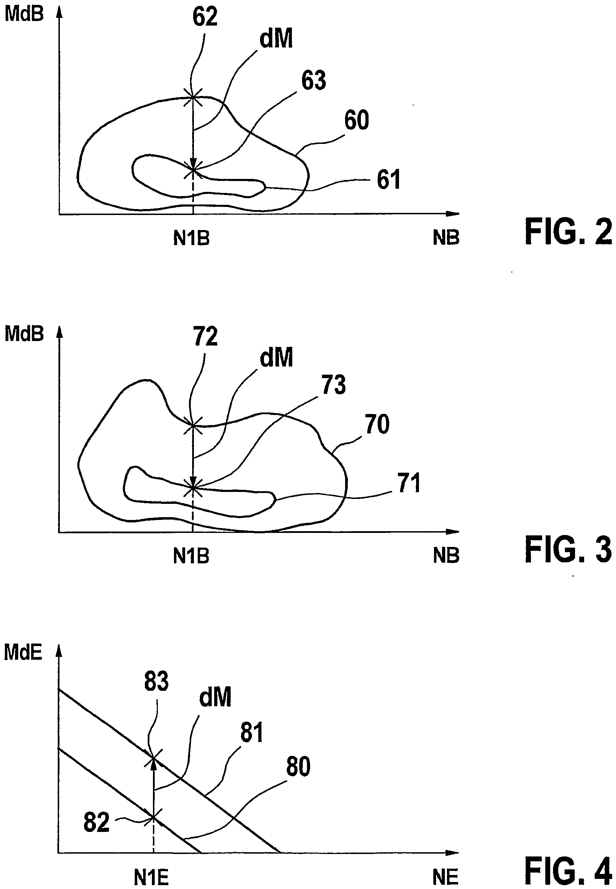

Figur 1 zeigt ein technisches Umfeld, in dem ein erfindungsgemäßes Verfahren abläuft, Figuren 2 und 3 zeigen Kennlinien einer Kenngröße eines Abgases einer Brennkraftmaschine in Abhängigkeit von der Drehzahl und vom Drehmoment und Figur 4 zeigt Kennlinien eines Elektromotors in Abhängigkeit von der Drehzahl und des Drehmoments.

Figur 1 zeigt eine Brennkraftmaschine 10, in deren Ansaugbereich ein Luftsensor 11 und in deren Abgasbereich ein erster Katalysator 12, ein Abgas-Temperatursensor 13, ein Partikelfilter 14, ein zweiter Katalysator 15, ein NOx-Sensor 16 sowie ein HC-Sensor 17 angeordnet sind.

Der Luftsensor 11 gibt an eine Steuerung 20 ein Luftsignal msL, der Abgas-Temperatursensor 13 ein Abgas-Temperatursignal Tabg, der NOx-Sensor 16 ein NOx-Signal NOx und der HC-Sensor 17 ein HC-Signal HC ab.

Die Brennkraftmaschine 10 stellt der Steuerung 20 eine Brennkraftmaschinen Drehzahl NB zur Verfügung. Der Steuerung 20 wird weiterhin ein Drehmoment-Sollwert mifa zugeführt.

Der Brennkraftmaschine 10 ist eine Kraftstoff-Zumessvorrichtung 30 zugeordnet, die von der Steuerung 20 mit einem Kraftstoffsignal mE beaufschlagt wird.

Die Steuerung 20 gibt an einen Elektromotor 40 ein erstes Ansteuersignal PWM 1, an eine dem Partikelfilter 14 zugeordnete Partikelfilter-Heizung 41 ein zweites Ansteuersignal PWM 2 und an eine dem zweiten Katalysator 15 zugeordnete Katalysator-Heizung 42 ein drittes Ansteuersignal PWM 3 ab.

Die elektrische Energie für den Elektromotor 40 sowie für die Partikelfilter-Heizung 41 und die Katalysator-Heizung 42 stellt eine Energiequelle 50 bereit.

Figur 2 zeigt einen ersten und zweiten Kurvenverlauf 60, 61 einer Kenngröße des Abgases in Abhängigkeit von der Brennkraftmaschinen-Drehzahl NB und in Abhängigkeit vom Drehmoment MdB der Brennkraftmaschine 10. Auf dem ersten Kurvenverlauf 60 der Kenngröße des Abgases ist ein erster Startpunkt 62 bei einer bestimmten Brennkraftmaschinen-Drehzahl N1B eingetragen. Eine Drehmomentänderung dM führt zu einem ersten Zielpunkt 63, der bei der bestimmten Brennkraftmaschinen-Drehzahl N1B auf dem zweiten Kurvenverlauf 61 der Kenngröße des Abgases liegt.

Figur 3 zeigt einen ersten und zweiten Kurvenverlauf 70, 71 einer weiteren Kenngröße des Abgases in Abhängigkeit von der Brennkraftmaschinen-Drehzahl NB und in Abhängigkeit vom Drehmoment MdB der Brennkraftmaschine 10. Auf dem ersten Kurvenverlauf 71 der weiteren Kenngröße des Abgases ist ein zweiter Startpunkt 72 bei der bestimmten Brennkraftmaschinen-Drehzahl N1B eingetragen. Die Drehmomentänderung dM führt zu einem zweiten Zielpunkt 63, der bei der bestimmten Brennkraftmaschinen-Drehzahl N1B auf dem zweiten Kurvenverlauf 71 der weiteren Kenngröße des Abgases liegt.

Figur 4 zeigt eine erste und zweite Kennlinie 80, 81 des Elektromotors 40 in Abhängigkeit von der Elektromotor-Drehzahl NE und in Abhängigkeit vom Elektromotor-Drehmoment MdE. Auf der ersten Kennlinie 80 des Elektromotors 40 ist bei einer bestimmten Elektromotor-Drehzahl N1E ein dritter Startpunkt 82 eingetragen. Die Drehmomentänderung dM führt zu einem dritten Zielpunkt 83, der bei der bestimmten Elektromotor-Drehzahl N1E auf der zweiten Kennlinie 81 des Elektromotors 40 liegt.

Das erfindungsgemäße Verfahren arbeitet folgendermaßen:

Die in Figur 1 gezeigte Anordnung mit der wenigstens einen Brennkraftmaschine 10 und dem wenigstens einen Elektromotor 40 treibt ein Hybridfahrzeug an. Die Brennkraftmaschine 10 und der Elektromotor 40 arbeiten beispielsweise über ein nicht näher gezeigtes Getriebe auf wenigstens ein Antriebsrad des Hybridfahrzeugs. Die Kopplung der Brennkraftmaschine 10 mit dem Elektromotor 40 kann auch dadurch erfolgen, dass ein Teil des Elektromotors 40 unmittelbar der Abtriebswelle der Brennkraftmaschine 10 zugeordnet ist. Die Steuerung 20 steuert sowohl die Brennkraftmaschine 10 als auch den Elektromotor 40 in Abhängigkeit vom Drehmoment-Sollwert mifa an, der beispielsweise einer Position eines nicht näher gezeigten Fahrpedals des Hybridfahrzeugs entspricht.

Der Begriff Drehmoment ist nicht auf ein Drehmoment als solches eingeschränkt anzusehen. Der Begriff Drehmoment ist vielmehr allgemein zu verstehen als ein Maß beispielsweise für eine Antriebskraft oder beispielsweise für eine Antriebsleistung, die vom Hybridfahrzeug gefordert wird.

Die Steuerung 20 legt das Kraftstoffsignal mE beispielsweise in Abhängigkeit vom Luftsignal msL und in Abhängigkeit von der Brennkraftmaschinen-Drehzahl NB fest. Ausgangspunkt kann der erste Startpunkt 62 sein, der auf dem ersten Kurvenverlauf 60 der Kenngröße des Abgases bei der bestimmten Brennkraftmaschinen-Drehzahl N1B liegt.

Die Kenngröße des Abgases ist beispielsweise eine Konzentration einer unerwünschten Abgas-Komponente. Bei der unerwünschten Abgas-Komponente kann es sich um die NOx-Konzentration handeln, die der NOx-Sensor 16 erfasst und/oder die anhand von bekannten Betriebskenngrößen der Brennkraftmaschine 10 berechnet werden kann. Die Kenngröße des Abgases kann alternativ oder zusätzlich die HC-Konzentration sein, die der HC-Sensor 17 erfasst und/oder die anhand von bekanntem Betriebskenngrößen der Brennkraftmaschine 10 berechnet werden kann. Alternativ oder zusätzlich kann die CO-Konzentration berücksichtigt werden. Weiterhin kann es sich bei der Kenngröße des Abgases alternativ oder zusätzlich um die Partikel-Konzentration handeln.

Sofern mehr als eine Kenngröße des Abgases zur Optimierung herangezogen wird, muss ein Kompromiss gefunden werden, der die berücksichtigten Kenngrößen einschließt.

Der erste Kurvenverlauf 60 entspricht beispielsweise einer Konzentration einer unerwünschten NOx-Konzentration, die höher liegt als die NOx-Konzentration, welche der zweite Kurvenverlauf 61 widerspiegelt. Um eine möglichst geringe NOx-Rohemissionen der Brennkraftmaschine 10 zu erreichen, ist deshalb vorgesehen, dass im ersten Schritt der Drehmomentbeitrag MdB der Brennkraftmaschine 10 in Abhängigkeit von der wenigstens einen Kenngröße des Abgases festgelegt wird, im Beispiel in Abhängigkeit von der NOx-Konzentration. Zunächst werden die grundsätzlichen Drehmomentbeiträge der wenigstens einen Brennkraftmaschine 10 und des wenigstens einen Elektromotors 40 des Hybridfahrzeugs ermittelt.

Anstelle der Festlegung des Betriebspunkts der Brennkraftmaschine 10 auf den ersten Startpunkt 62 wie bisher, wird erfindungsgemäß der Betriebspunkt der Brennkraftmaschine 10 jetzt auf den ersten Zielpunkt 63 eingestellt. Die im ersten Schritt vorgenommene Festlegung des Drehmomentbeitrags MdB der Brennkraftmaschine 10 entspricht dem Drehmoment MdB der Brennkraftmaschine 10 im ersten Zielpunkt 63. Verbunden mit der Vorgabe des ersten Zielpunkts ist die Drehmomentänderung dM, die zwischen dem ersten Startpunkt 62 und dem ersten Zielpunkt 63 bei der bestimmten Brennkraftmaschinen-Drehzahl N1B auftritt. Die Änderung des Drehmoments dM wirkt sich auch auf andere Kenngrößen des Abgases aus. In Figur 3 sind deshalb der erste und zweite Kurvenverlauf 70, 71 einer weiteren Kenngröße des Abgases eingetragen, wobei zwischen dem zweiten Startpunkt 72 und dem zweiten Zielpunkt 73 die Drehmomentänderung dM bei der bestimmten Brennkraftmaschinen-Drehzahl N1B auftritt. Bei der weiteren Kenngröße des Abgases handelt es sich beispielsweise um die Abgastemperatur, die der Abgas-Temperatursensor 13 erfasst, und/oder die anhand von bekannten Betriebskenngrößen der Brennkraftmaschine 10 berechnet werden kann. Der erste Kurvenverlauf 70 entspricht beispielsweise einer höheren Abgastemperatur als der zweite Kurvenverlauf 71.

Im zweiten Schritt wird der Drehmomentbeitrag MdE des Elektromotors 40 anhand der Differenz zwischen dem Drehmoment-Sollwert mifa und dem im ersten Schritt festgelegten Drehmomentbeitrag MdB der Brennkraftmaschine 10 festgelegt. Sofern es sich bei der Drehmomentänderung dM um eine Absenkung gehandelt hat, muss der Elektromotor 40 eine entsprechende Erhöhung des Drehmoments aufbringen. Die Erhöhung des Drehmoments dM des Elektromotors 40 ist in Figur 4 eingetragen, wobei ausgehend vom dritten Startpunkt 82 zum dritten Zielpunkt 83 gegangen wird. Der dritte Startpunkt 82 ist unberührt von der Änderung des Drehmomentbeitrags MdE des Elektromotors 40 im Rahmen der Aufteilung der Drehmomentbeiträge der wenigstens einen Brennkraftmaschine 10 und dem wenigstens einen Elektromotor 40 des Hybridfahrzeugs vorzugeben. Die Drehmomenterhöhung dM befindet bei der bestimmten Elektromotor-Drehzahl N1E statt, die nicht identisch sein muss mit der bestimmten Brennkraftmaschinen-Drehzahl N1B.

Die in Figur 4 gezeigten Kennlinien 80, 81 entsprechen dem funktionalen Zusammenhang zwischen Drehzahl und Drehmoment eines Gleichstrommotors. In der Praxis wird als Elektromotor vorzugsweise eine Synchronmaschine eingesetzt.

Die im gezeigten Ausführungsbeispiel vorzunehmende Erhöhung des Drehmoments dM des Elektromotors 40 nimmt die Steuerung 20 durch eine Änderung des ersten Ansteuersignals PWM 1 des Elektromotors 40 vor. Das erste Ansteuersignal PWM 1 ist beispielsweise ein impulsbreitenmoduliertes Signal, das die mittlere Betriebsspannung des Elektromotors 40 verändert, die von der Energiequelle 50 bereitgestellt wird. Eine Variation der Betriebsspannung führt zu einer entsprechenden Änderung des Motorstromes, der ein Maß für das vom Elektromotor 40 abgegebene Drehmoment MdE ist.

Im gezeigten Ausführungsbeispiel ist eine Erhöhung des Drehmoments dM des Elektromotors 40 vorgesehen. Es können jedoch auch andere Betriebszustände vorgesehen sein. Beispielsweise kann eine Erhöhung des Drehmoments dM der Brennkraftmaschine 10 zum gezielten Beeinflussen der Kenngröße des Abgases vorgesehen sein, wobei dann eine Verminderung des Drehmoments MdE des Elektromotors 40 vorzusehen ist. In Abhängigkeit von der Betriebssituation kann vorgesehen sein, dass das Drehmoment MdE des Elektromotors 40 dennoch gleichzeitig erhöht wird. Diese Betriebssituation kann auftreten, wenn eine Anforderung zum Laden der Energiequelle auftritt. Das Laden der Energiequelle 50 kann durch ein Betreiben des Elektromotors 40 als Generator erreicht werden. In diesem Fall treibt die Brennkraftmaschine 10 den Elektromotor 40 an.

Im gezeigten Ausführungsbeispiel ist gemäß Figur 3 durch den Übergang vom ersten zum zweiten Kurvenverlauf 70, 71 mit einem Sinken der Abgastemperatur zu rechnen. Eine Änderung der Abgastemperatur kann die Wirksamkeit einer Abgasbehandlungsvorrichtung beeinflussen. Im gezeigten Ausführungsbeispiel enthält die Abgasbehandlungsvorrichtung den ersten und zweiten Katalysator 12, 15 sowie das Partikelfilter 14. Die katalytischen Reaktionen im gegebenenfalls vorgesehenen ersten Katalysator 12, der beispielsweise ein Oxidations-Katalysator ist, und/oder im gegebenenfalls vorgesehenen zweiten Katalysator 15, der beispielsweise ein NOx-Speicherkatalysator ist, laufen optimal in einem bestimmten Temperaturbereich ab. Unterhalb einer vorgegebenen Mindest-Betriebstemperatur kann die Reinigungsfunktion des Abgases nicht mehr stattfinden. Es muss deshalb sichergestellt werden, dass die Betriebstemperatur innerhalb des optimalen Betriebstemperaturbereichs liegt, zumindest aber die Mindest-Betriebstemperatur übersteigt.

Das gegebenenfalls vorhandene Partikelfilter 14 sowie der gegebenenfalls als SpeicherKatalysator ausgestaltete zweite Katalysator 15 müssen regeneriert werden. Die Regeneration im zweiten Katalysator 15 kann eine gegenüber dem Speicherbetrieb erhöhte Betriebstemperatur erforderlich machen. Die Regeneration des Partikelfilters 14 kann eine bestimmte Betriebstemperatur erforderlich machen, bei der die Partikel durch Oxidation abbrennen. Die jeweils erforderlichen Mindest-Betriebstemperaturen können beispielsweise durch eine entsprechende Festlegung der Abgastemperatur erreicht werden.

Sofern gemäß des Ausführungsbeispiels von einer unerwünschten Abgas-Komponente als Kenngröße des Abgases beim Optimieren ausgegangen wird, kann der Fall auftreten, dass die Abgastemperatur zu niedrig ist. In einer Ausgestaltung ist deshalb eine elektrische Beheizung des Partikelfilters 14 und/oder des zweiten Katalysator 15 vorgesehen. Sowohl die Partikelfilter-Heizung 41 als auch die Katalysator-Heizung 42 beziehen die elektrische Energie aus der Energiequelle 50. Zur Durchführung der elektrischen Beheizung steuert die Steuerung 20 die Partikelfilter-Heizung 41 mit dem zweiten Ansteuersignal PWM 2 und/oder die Katalysator-Heizung 42 mit dem dritten-Ansteuersignal PWM 3 an. Die Steuersignale PWM 2, PWM 3 ermöglichen eine kontinuierliche Festlegung der Heizleistung.

Gemäß einer anderen Ausgestaltung kann vorgesehen sein, dass die elektrische Beheizung in jedem Fall durchgeführt wird. Dieser Betriebszustand kann beispielsweise bei einem Kaltstart der Brennkraftmaschine 10 gegeben sein, bei dem die erforderliche Betriebstemperatur der Abgasbehandlungsvorrichtung 12, 14,15 unabhängig von der Festlegung des ersten Zielpunkts 63 nicht erreicht werden kann. Die Betriebstemperatur kann selbst dann nicht erreicht werden, wenn als Kenngröße die Abgastemperatur gemäß Figur 3 zur Optimierung im ersten Schritt herangezogen wird.

## Patentansprüche

1. Verfahren zum Betreiben eines Hybridfahrzeugs, bei dem ein vorgegebener Drehmoment-Sollwert (mifa) additiv von wenigstens einer Brennkraftmaschine (10) und wenigstens einem Elektromotor (40) aufgebracht wird,
wobei
in einem ersten Schritt der Drehmomentbeitrag (MdB) der Brennkraftmaschine (10) in Abhängigkeit von wenigstens einer Kenngröße (NOx, HC, CO, Partikel, Tabg) des Abgases und wobei in einem zweiten Schritt der Drehmomentbeitrag (MdE) des Elektromotors (40) anhand der Differenz (dM) zwischen dem Drehmoment-Sollwert (mifa) und dem im ersten Schritt festgelegten Drehmomentbeitrag (MdB) der Brennkraftmaschine (10) festgelegt wird,
**dadurch gekennzeichnet, dass**
eine Optimierung wenigstens einer unerwünschten Abgaskomponente (NOx, HC, CO, Partikel) Vorrang hat gegenüber einer Festlegung der Abgastemperatur (Tabg) und dass bei nicht ausreichender Abgastemperatur (Tabg) die Abgasbehandlungsvorrichtung (12, 14, 15) zur Aufrechterhaltung des Betriebstemperaturbereichs elektrisch beheizt wird.

2. Verfahren nach Anspruch 1, **dadurch gekennzeichnet, dass** die Kenngröße des Abgases eine unerwünschte Abgaskomponente (NOx, HC, CO, Partikel) ist.

3. Verfahren nach Anspruch 1, **dadurch gekennzeichnet, dass** die Kenngröße des Abgases die Abgastemperatur (Tabg) ist

4. Verfahren nach Anspruch 3, **dadurch gekennzeichnet, dass** die Abgastemperatur (Tabg) im Hinblick auf den Betriebstemperaturbereich einer Abgasbehandlungsvorrichtung (12, 14, 15) vorgegeben wird.

5. Verfahren nach Anspruch 4, **dadurch gekennzeichnet, dass** die Abgastemperatur (Tabg) auf den Betriebstemperaturbereich eines Katalysators (12, 15) oder eines Partikelfilters (14) abgestimmt wird.

6. Verfahren nach Anspruch 1, **dadurch gekennzeichnet, dass** der Drehmomentbeitrag (MdE) des Elektromotors (40) positiv oder negativ sein kann.

7. Verfahren nach den Ansprüchen 1, 3 und 4, **dadurch gekennzeichnet, dass** bei einem Kaltstart der Brennkraftmaschine (10) die Abgasbehandlungsvorrichtung (12, 14, 15) zur Aufrechterhaltung des Betriebstemperaturbereichs elektrisch beheizt wird.

8. Verfahren nach Anspruch 2, **dadurch gekennzeichnet, dass** die Kenngröße des Abgases die NOx-Konzentration ist.

## Claims

1. Method for operating a hybrid vehicle, in which method a predefined setpoint torque (mifa) is imparted additively by at least one internal combustion engine (10) and at least one electric motor (40), wherein in a first step, the torque contribution (MdB) of the internal combustion engine (10) is specified as a function of at least one characteristic variable (NOx, HC, CO, particles, Tabg) of the exhaust gas, and wherein in a second step, the torque contribution (MdE) of the electric motor (40) is specified on the basis of the difference (dM) between the setpoint torque (mifa) and the torque contribution (MdB) of the internal combustion engine (10) specified in the first step,
**characterized in that**
an optimization of at least one undesired exhaust-gas component (NOx, HC, CO, particles) has priority over a specification of the exhaust-gas temperature (Tabg), and **in that**, if the exhaust-gas temperature (Tabg) is not sufficient, the exhaust-gas treatment device (12, 14, 15) is heated electrically in order to maintain the operating temperature range.

2. Method according to Claim 1, **characterized in that** the characteristic variable of the exhaust gas is an undesired exhaust-gas component (NOx, HC, CO, particles).

3. Method according to Claim 1, **characterized in that** the characteristic variable of the exhaust gas is the exhaust-gas temperature (Tabg).

4. Method according to Claim 3, **characterized in that** the exhaust-gas temperature (Tabg) is predefined with regard to the operating temperature range of an exhaust-gas treatment device (12, 14, 15).

5. Method according to Claim 4, **characterized in that** the exhaust-gas temperature (Tabg) is coordinated with the operating temperature range of a catalytic converter (12, 15) or of a particle filter (14).

6. Method according to Claim 1, **characterized in that** the torque contribution (MdE) of the electric motor (40) may be positive or negative.

7. Method according to Claims 1, 3 and 4, **characterized in that**, during a cold start of the internal combustion engine (10), the exhaust-gas treatment device (12, 14, 15) is electrically heated in order to maintain the operating temperature range.

8. Method according to Claim 2, **characterized in that** the characteristic variable of the exhaust gas is the NOx concentration.

## Revendications

1. Procédé pour faire fonctionner un véhicule hybride, dans lequel une valeur de couple de consigne prédéterminée (mifa) est fournie de manière additive par au moins un moteur à combustion interne (10) et au moins un moteur électrique (40),
dans une première étape, la contribution au couple (MdB) du moteur à combustion interne (10) est déterminée en fonction d'au moins une grandeur caractéristique (NOx, HC, CO, particules, Tabg) du gaz d'échappement et dans une deuxième étape la contribution au couple (MdE) du moteur électrique (40) est déterminée à l'aide de la différence (dM) entre la valeur de couple de consigne (mifa) et la contribution au couple (MdB) du moteur à combustion interne (10) déterminée dans la première étape,
**caractérisé**
**en ce qu'**une optimisation d'au moins une composante de gaz d'échappement indésirable (NOx, HC, CO, particules) a priorité par rapport à une détermination de la température du gaz d'échappement (Tabg) et en ce que, lorsque la température du gaz d'échappement (Tabg) n'est pas suffisante, le dispositif de traitement des gaz d'échappement (12, 14, 15) est chauffé électriquement pour maintenir la plage de température fonctionnelle.

2. Procédé selon la revendication 1, **caractérisé en ce que** la grandeur caractéristique du gaz d'échappement est une composante de gaz d'échappement indésirable (NOx, HC, CO, particules).

3. Procédé selon la revendication 1, **caractérisé en ce que** la grandeur caractéristique du gaz d'échappement est la température du gaz d'échappement (Tabg).

4. Procédé selon la revendication 3, **caractérisé en ce que** la température du gaz d'échappement (Tabg) est prédéfinie dans l'optique de la plage de températures fonctionnelles d'un dispositif de traitement des gaz d'échappement (12, 14, 15).

5. Procédé selon la revendication 4, **caractérisé en ce que** la température du gaz d'échappement (Tabg) est adaptée à la plage de températures fonctionnelles d'un catalyseur (12, 15) ou d'un filtre à particules (14).

6. Procédé selon la revendication 1, **caractérisé en ce que** la contribution au couple (MdE) du moteur électrique (40) peut être positive ou négative.

7. Procédé selon les revendications 1, 3 et 4, **caractérisé en ce que** dans le cas d'un démarrage à froid du moteur à combustion interne (10), le dispositif de traitement des gaz d'échappement (12, 14, 15) est chauffé électriquement pour maintenir la plage de températures fonctionnelles.

8. Procédé selon la revendication 2, **caractérisé en ce que** la grandeur caractéristique du gaz d'échappement est la concentration en NOx.
